# EUROPÄISCHE PATENTSCHRIFT

(11) **EP 1 869 333 B1**
(45) Veröffentlichungstag und Bekanntmachung des Hinweises auf die Patenterteilung: **20.08.2008**
(21) Anmeldenummer: 06722770.2
(22) Anmeldetag: 10.04.2006
(51) Int. Cl.: F16C 23/04, F16C 27/02

(54) **LAGERBUCHSE**
BEARING BUSH
COUSSINET DE PALIER

(30) Priorität: 11.04.2005 DE 202005005762 U
(43) Veröffentlichungstag der Anmeldung: 26.12.2007
(73) Patentinhaber: igus GmbH, 51147 Köln (DE)
(72) Erfinder: BLASE, Günter, 51429 Bergisch Gladbach (DE)
(74) Vertreter: Gudat, Axel
(86) Internationale Anmeldenummer: PCT/DE2006/000626
(87) Internationale Veröffentlichungsnummer: WO 2006/108389

(56) Entgegenhaltungen:
- EP-A- 0 703 655
- DE-A1- 2 943 711
- DE-A1- 19 904 031

## Beschreibung

Die Erfindung betrifft eine Lagerbuchse mit einem Lagerbereich mit einer Aufnahme zur vorzugsweise gleitenden oder gelenkigen Lagerung eines Bauteils und mit einem den Lagerbereich radial außenseitig umgebenden Gehäuse, welches einen vorzugsweise im Presssitz in einer Vorrichtungsaufnahme festlegbaren Haltebereich aufweist, wobei an der Gehäuseaußenseite am Haltebereich, der den Presssitz ausbildet, eine Mehrzahl von radial vorstehenden Vorsprüngen vorgesehen ist, die in radialer deformierbar oder lageveränderlich gelagert sind.

Gattungsgemäße Lagerbuchsen werden oftmals im Presssitz an der jeweiligen Vorrichtungsaufnahme festgelegt. Die Lagerbuchsen weisen hierzu ein zumeist zylinderförmig ausgebildetes Gehäuse auf, welches mit der Außenfläche in die entsprechende Vorrichtungsaufnahme eingepresst wird. Die Vorrichtungsaufnahme und der den Presssitz ausbildende Haltebereich des Gehäuses müssen hierbei in sehr engen Maßtoleranzen gefertigt sein, um einen ausreichenden Presssitz und eine noch einfach durchzuführende Einpressung der Lagerbuchse in die Vorrichtungsaufnahme zu gewährleisten. Oftmals stellt sich hierbei das Problem, dass in Abhängigkeit von den Toleranzen der Vorrichtungsaufnahme das Verstellmoment bezüglich einer axialen und/oder rotatorischen Lageveränderung der Lagerbuchse gegenüber der jeweiligen Vorrichtung deutlichen Schwankungen unterliegt, was für viele Anwendungsfälle von Nachteil ist.

Eine gattungsgemäße Lagerbuchse ist der DE 199 04 031 A1 zu entnehmen.

Der Erfindung liegt daher die Aufgabe zugrunde, eine Lagerbuchse bereitzustellen, die auch bei gewissen Toleranzschwankungen des Durchmessers der Vorrichtungsaufnahme und/oder des Haltebereichs der Lagerbuchse mit in engen Toleranzen definiertem Verstellmoment in der Vorrichtungsaufnahme festlegbar ist.

Diese Aufgabe wird durch eine Lagerbuchse mit den Merkmalen nach Anspruch 1 gelöst. Mittels der gehäuseaußenseitig am Haltebereich angeordneten Vorsprünge ist das Gehäuse im Presssitz in der Vorrichtungsaufnahme festlegbar, wobei durch eine Deformation und/oder Lageveränderung der Vorsprünge in radialer Richtung beim Einführen bzw. Einpressen der Lagerbuchse in die Aufnahme Maßtoleranzen der Vorrichtungsaufnahme ausgeglichen werden können. Die Vorsprünge können hierbei elastisch oder im Wesentlichen plastisch deformierbar sein, worunter ggf. auch eine Formänderung der Vorsprünge durch Materialabtragung beim Einpressen in die Vorrichtungsaufnahme fallen kann. Die Lageveränderung der Vorsprünge kann vorzugsweise durch elastische oder auch plastische Deformation der die Vorsprünge halternden Gehäusebereiche erfolgen. Es können 3 oder mehr, vorzugsweise mehr als 4 oder 6 um den Gehäuseumfang verteilte Vorsprünge vorgesehen sein. Die Vorsprünge sind hierbei jeweils an einem sich beidseitig derselben in Umfangsrichtung erstreckenden, in radialer Richtung deformierbaren Steg angeordnet, und der Steg ist jeweils beidseitig der Vorsprünge an dem Gehäuse lastabtragend befestigt, vorzugsweise einstückig angeformt. Durch elastische und/oder plastische Deformation des Steges können somit Toleranzen der Vorrichtungsaufnahme ausgeglichen werden. Durch die beidseitig lastabtragende Anordnung der Stege an dem Gehäuse ist eine hohe Kraftaufnahme durch die Stege und damit die Erzielung eines ausreichenden Presssitzes gewährleistet.

Ist die Lagerbuchse alternativ oder zusätzlich durch weitere Befestigungsmittel wie z. B. eine frontseitig angeordnete Halterungsplatte oder Halterungsflansch in der Vorrichtungsaufnahme festzulegen, so dienen die federnd gelagerten Vorsprünge als Zentrier- bzw. Montagehilfe. Durch die erfindungsgemäßen in radialer Richtung lageveränderlichen, vorzugsweise federnd gelagerten, Vorsprünge an der Gehäuseaußenseite ist die Lagerbuchse somit auch bei größeren Maßtoleranzen der Vorrichtungsaufnahme stets mit definiertem Presssitz und gleich bleibendem Verstellmoment an der Vorrichtung festlegbar.

Vorteilhafte Ausführungsformen ergeben sich aus den Unteransprüchen.

Die Stege können hierbei in axialer Richtung auf Höhe des Lagerkörpers angeordnet sein. Sie können sich über die gesamte Länge des Haltebereichs oder im wesentlichen die gesamte Länge des in die Vorrichtungsaufnahme einführbaren Bereichs des Gehäuses erstrecken oder zumindest im Bereich der in Einbaulage vorderen und/oder hinteren Gehäusestirnseiten angeordnet sein. Die Stege sind vorzugsweise jeweils radial außenseitig zu einem starren Gehäusebereich angeordnet. Die Stege könne jeweils über ihre gesamte Länge beidseitig lastabtragend mit dem Gehäuse verbunden sein.

Vorzugsweise ist in radialer Richtung unterhalb des Steges eine Ausnehmung vorgesehen, die sich in Umfangsrichtung und axialer Richtung und vorzugsweise auch in radialer Richtung über die Erstreckung des jeweils an dem Steg vorgesehenen Vorsprungs erstreckt. Insbesondere können sich die an dem Steg angeordneten Vorsprünge über die gesamte Länge des Haltebereichs der Lagerbuchse oder der gesamten Gehäuselänge erstrecken. Dies gilt dann entsprechend auch für die axiale Ausdehnung der unterhalb des Steges angeordneten Ausnehmung oder Tasche. Vorzugsweise erstreckt sich die unterhalb des Steges angeordnete Ausnehmung in Umfangsrichtung über ein Mehrfaches, beispielsweise das mehr als zwei-, drei- oder vierfache der Umfangserstreckung des jeweiligen Vorsprungs an dem der Ausnehmung zugeordneten Steg. Vorzugsweise ist die unterhalb des Steges angeordnete Ausnehmung jeweils derart bemessen, dass der an dem Steg angeordnete Vorsprung bei radialer Krafteinwirkung vollständig von der Ausnehmung aufgenommen werden kann. Die Höhe der Ausnehmung in radialer Richtung kann in etwa der Höhe der jeweiligen Vorsprünge entsprechen. Die Ausnehmung kann jeweils kreisbogenförmig ausgebildet sein.

Vorzugsweise weisen die Stege entlang ihrer Axialerstreckung unterschiedliche Elastizitäten auf, wobei vorzugsweise die Elastizität in Richtung auf das in Montageanordnung vordere Ende hin abnimmt, welches somit der Öffnung der Vorrichtungsaufnahme zugewandt ist. Die abnehmende Elastizität kann beispielsweise durch eine zunehmende Materialstärke der Stege oder durch die Stege an ihrem vorderen Ende übergreifende Bünde, wie unten beschrieben, erzielt werden, wobei die Stege an ihrem vorderen Ende praktisch starr sein können. Hierdurch können Toleranzen der Vorrichtungsaufnahme am hinteren Stegbereich durch elastische oder plastische (nicht materialabtragende) Verformung der Stege und/oder ggf. auch der Vorsprünge und im vorderen Bereich im wesentlichen durch Materialabtragung der Vorsprünge ausgeglichen werden.

An dem Gehäuse können ferner in radialer Richtung vorstehende, vorzugsweise senkrecht oder gegebenenfalls auch schräg zur Gehäuselängsachse angeordnete Bünde vorgesehen sein, die die Einschubtiefe des Gehäuses in die Vorrichtungsaufnahme begrenzen. Die Bünde sind vorzugsweise gleichmäßig über den Umfang des Gehäuses verteilt angeordnet und erstrecken sich vorzugsweise von der Gehäusestirnseite aus in radialer Richtung und schließen hierzu bündig mit der Gehäusestirnseite ab. Die radiale Umfangserstreckung der Bünde kann jeweils ein Vielfaches derjenigen der an den Stegen angeordneten Vorsprünge sein. Die Bünde können im Wesentlichen starr ausgeführt sein und sind mit dem Gehäuse vorzugsweise einstückig verbunden. Die Bünde sind vorzugsweise gleichmäßig über den Umfang des Gehäuses verteilt angeordnet.

Vorzugsweise sind die jeweils an den Stegen angeordneten Vorsprünge zwischen zwei seitlich benachbarten Bünden angeordnet, so dass die Vorsprünge stirnseitig nicht durch die Bünde abgedeckt werden. Wird somit die Lagerbuchse in eine vergleichsweise enge Vorrichtungsaufnahme eingepresst, so dass von den Oberseiten der Vorsprünge Material z.B. spanabhebend abgetragen wird, so kann dass abgetragene Material leicht und ohne Behinderung durch die Bünde entfernt werden. Hierzu können sich die Bünde seitlich bis nahezu oder unmittelbar bis an die an den Stegen angeordneten Vorsprünge erstrecken, so dass zwischen den Bünden ein Freiraum verbleibt, auf dessen Höhe der jeweilige Vorsprung angeordnet ist. Vorzugsweise erstreckt sich - gegebenenfalls auch unabhängig von dem oben gesagten - der jeweilige Vorsprung bis in den Zwischenraum zwischen jeweils zwei seitlich benachbarten Bünden, vorzugsweise bis auf die Höhe der freien Stirnseiten der Bünde bzw. dem der Vorrichtung abgewandten Ende des Haltebereichs der Lagerbuchse oder des Gehäuses insgesamt. Hierdurch wird die Entfernung von beim Einpressen der Lagerbuchse in die Vorrichtungsaufnahme von den Vorsprüngen abgetragenem Material erleichtert.

Die Bünde können sich jeweils in Umfangsrichtung einseitig oder beidseitig über die unterhalb der Stege angeordnete Ausnehmung in Richtung auf den an dem Steg angeordneten Vorsprung, vorzugsweise bis nahezu oder bis unmittelbar an diesen, erstrecken. Vorzugsweise sind die Bünde hierbei über deren gesamte Umfangserstreckung an dem Gehäuse, einschließlich des jeweiligen Steges, einstückig angeformt. Hierdurch kann die Deformierbarkeit der Stege und damit die zum Einpressen der Lagerbuchse in die Vorrichtungsaufnahme notwendige Presskraft mitbestimmt werden.

Vorzugsweise ist das jeweilige Gehäuse einschließlich der an diesem angebrachten Stege, Vorsprünge und Bünde einteilig ausgeführt.

Die Lagerbuchse kann derart ausgebildet sein, dass bei Maßtoleranzen von bis zu 0,5, 0,75 oder auch bis 1 mm der Vorrichtungsaufnahme und/oder bei Temperaturen von Raumtemperatur bis 50°C, bis 65°C oder sogar bis 80°C sich ein nahezu gleich bleibendes Verstellmoment gegen axiale und/oder rotatorische Lageveränderung des Gehäuses in der Vorrichtungsaufnahme ergibt. Hierzu können beispielsweise die radiale Erstreckung der Vorsprünge, die Elastizität der Stege, an welchen die Vorsprünge angeordnet sind, oder andere Parameter entsprechend bemessen werden.

Vorzugsweise wird die erfindungsgemäße Lagerbuchse lediglich im Presssitz in der Vorrichtungsaufnahme festgelegt. Für verschiedene Anwendungsfälle kann es jedoch auch zweckmäßig oder erforderlich sein, weitere Befestigungsmittel wie eine stirnseitig vor der Lagerbuchse angeordnete Halterungsplatte oder einen Halterungsflansch an der Vorrichtungsaufnahme vorzusehen, um das Gehäuse den Erfordernissen entsprechend an der Vorrichtungsaufnahme festzulegen. Für diesen Fall können, auch dann wenn das Gehäuse nicht im Presssitz in der Vorrichtungsaufnahme festgelegt wird, die zuvor beschriebenen, an den Stegen angeordneten Vorsprünge als Zentrier- und/oder Montagehilfe dienen.

Die erfindungsgemäße Lagerbuchse kann neben dem Gehäuse einen den Lagerbereich umfassenden, insbesondere auch separat ausgebildeten aber auch einstückig an dem Gehäuse angeformten Lagerkörper aufweisen. Durch entsprechende Materialwahl von Gehäuse und Lagerkörper hinsichtlich Steifigkeit, Gleitreibungseigenschaften, Elastizität usw. kann somit die Lagerbuchse an die jeweiligen Erfordernisse angepasst werden. Der separate Lagerkörper kann axial und/oder rotatorisch gegenüber dem Gehäuse beweglich sein oder aber lageunveränderlich an dem Gehäuse festgelegt sein. Die erfindungsgemäße Lagerbuchse kann beispielsweise als Axiallager zur Lagerung von in Längsrichtung des Gehäuses beweglichen Bauelementen, wie Schubstangen oder dergleichen, ausgeführt sein, insbesondere kann die Lagerbuchse als Gelenklager mit in einem Raumwinkel verschwenkbarer Kugelkalotte als den Lagerbereich umfassenden Lagerkörper ausgeführt sein, da bei einem Gelenklager bei Verschwenken der Kugelkalotte auf die das Gehäuse in der Vorrichtungsaufnahme haltenden Vorsprünge nur geringe oder keine Axialkräfte ausgeübt werden. Die erfindungsgemäße Lagerbuchse kann somit Allgemein zur Lagerung von gegenüber dem Gehäuse lageveränderlichen Bauelementen dienen.

Der Lagerkörper kann jeweils einstückig ausgeführt sein. Gehäuse und Lagerköper können aus Kunststoff bestehen, insbesondere als Spritzgussteile gefertigt sein. Die Lagerbuchse, die vorzugsweise nur aus den beiden Bauteilen Lagerkörper und Gehäuse besteht, kann in einem Überspritzverfahren hergestellt sein, wobei der Lagerkörper als Form zur Herstellung des Gehäuses oder umgekehrt das Gehäuse als Form zur Herstellung des Lagerkörpers dienen kann.

Die Erfindung wird nachfolgend beispielhaft beschrieben und anhand der Figuren beispielhaft erläutert. Es zeigen:
- Figur 1: eine stirnseitige Ansicht (Figur 1a) und eine Schnittansicht entlang der Linie B-B (Figur 1b) einer erfindungsgemäßen Lagerbuchse,
- Figur 2: eine Lagerbuchse nach Figur 1 montiert in einer Vorrichtungsaufnahme eines ersten Durchmessers in stirnseitiger Ansicht (Figur 2a) in Schnittdarstellung (Figur 2b) und in einer Detailansicht (Figur 2c),
- Figur 3: eine Lagerbuchse nach Figur 1 montiert in einer Vorrichtungsaufnahme eines zweiten Durchmessers in stirnseitiger Ansicht (Figur 3a), in Schnittdarstellung (Figur 3b) und in einer Detailansicht (Figur 3c).

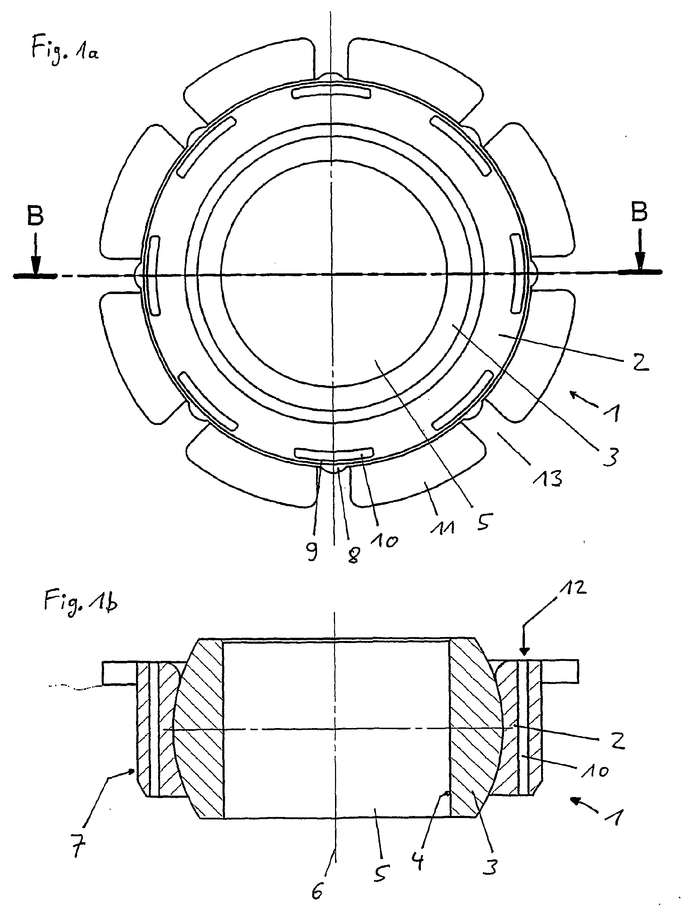

Figur 1 zeigt eine erfindungsgemäße Lagerbuchse 1 mit einem Gehäuse 2 und einem von dem Gehäuse 2 separaten und gegenüber dem Gehäuse lageveränderlichen Lagerkörper 3, der einen Lagerbereich 4 für ein zu lagerndes Bauteil und eine von dem Lagerbereich 4 umgebene Aufnahme 5 für das zu lagernde Bauteil aufweist. Die Lagerbuchse 1 ist nach dem Ausführungsbeispiel als Gelenklager ausgebildet, so dass der Lagerkörper 3 als Kugelkalotte ausgeführt ist und gegenüber dem Gehäuse 2 in einem Raumwinkel frei verschwenkbar bzw. abwälzbar ist, wobei der Lagerkörper 3 auch um die Längsachse 6 frei rotieren kann. Der Lagerkörper 3 ist hierbei als separates Bauteil hergestellt, wobei die Lagerbuchse in einem Überspritzverfahren hergestellt ist. Gehäuse 2 und Lagerkörper 3 sind jeweils einstückig hergestellt.

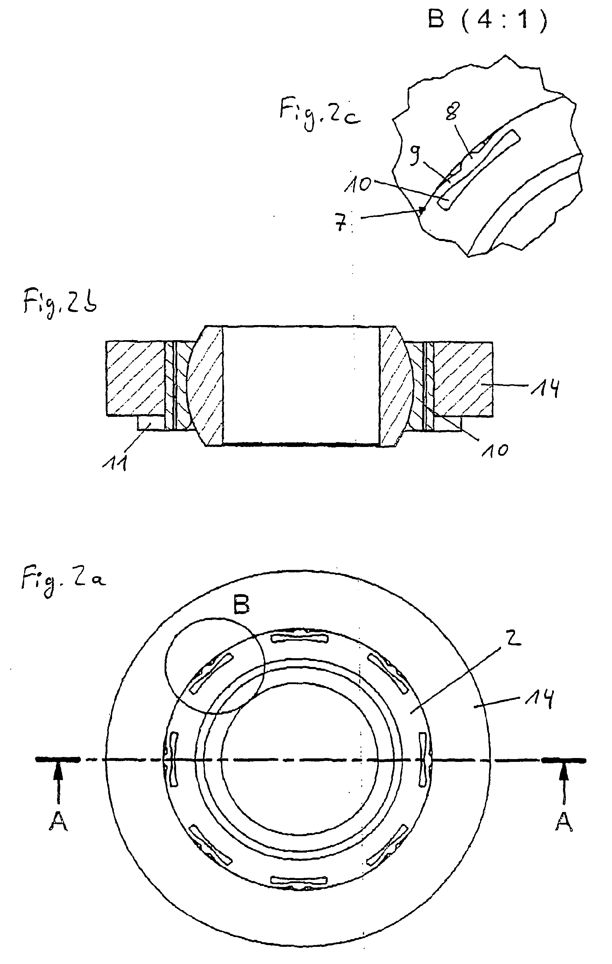

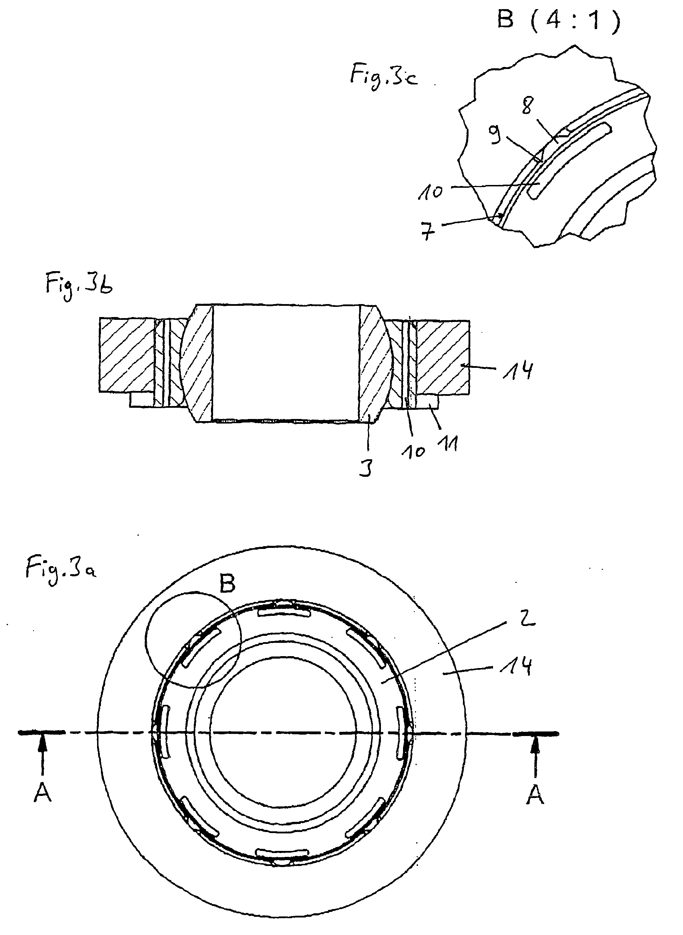

Das Gehäuse weist nach dem Ausführungsbeispiel eine im Wesentlichen zylindrische Umfangsfläche 7 auf, an welcher eine Mehrzahl von radial vorstehenden Vorsprüngen 8 vorgesehen ist, die in radialer Richtung lageveränderlich gelagert sind. Hierzu sind die Vorsprünge 8 auf radial federelastisch ausgebildeten oder gegebenenfalls auch plastisch deformierbaren Stegen 9 angeordnet, die jeweils beidseitig der Vorsprünge an dem Gehäuse lastabtragend befestigt sind. Die Stege sind einstückig an dem Gehäuse angeformt, wobei das Gehäuse insgesamt einteilig ausgeführt ist. Wie in den Figuren 2 und 3 näher dargestellt ist, können beim Einpressen der Lagerbuchse in eine Vorrichtungsaufnahme die Vorsprünge 8 radial einwärts gedrückt werden, so dass die Lagerbuchse im Presssitz festgelegt wird und Maßtoleranzen der Vorrichtungsaufnahme und/oder Temperaturänderungen des Gehäuses und/oder der Vorrichtung im Bereich der Vorrichtungsaufnahme ausgeglichen werden können.

Gemäß den Figuren ist jeweils unterhalb des Steges 9 eine Ausnehmung 10 vorgesehen, deren Umfangserstreckung und axiale Erstreckung zumindest derjenigen des an den Steg angeordneten Vorsprunges beträgt, nach dem Ausführungsbeispiel entsprechen Umfangserstreckung und axiale Ausdehnung der Ausnehmung 10 jeweils der des zugeordneten Steges 9. Steg 9 und Ausnehmung 10 erstrecken sich hierbei in Umfangsrichtung jeweils über ein Vielfaches, nach dem Ausführungsbeispiel um ca. das Vierfache, der Umfangsausdehnung des jeweils zugeordneten Vorsprungs 8. Ausnehmung 10, Steg 9 und Vorsprung 8 erstrecken sich jeweils über die gesamte axiale Länge des Gehäuses, wobei die Länge der Vorsprünge 8 gegebenenfalls auch geringer als die der Stege 9 sein kann.

Ferner sind an dem Gehäuse 2 in radialer Richtung vorstehende, senkrecht zur Gehäuselängsachse 6 angeordnete Bünde 11 vorgesehen, die die Einschubtiefe des Gehäuses in die Vorrichtungsaufnahme begrenzen, wozu die Bünde 11 in radialer Richtung über die Vorsprünge 8 vorstehen und nach dem Ausführungsbeispiel ein Vielfaches der Höhe der Vorsprünge 8 aufweisen. Ferner ist die Umfangserstreckung der Bünde 11 größer als die der Stege 9, ca. das Zweifache derselben, und ein Vielfaches größer als die Umfangserstreckung der Vorsprünge 8. Die Bünde 11 sind hierbei unmittelbar an der Stirnseite 12 des Gehäuses 2 einstückig angeformt.

Die Vorsprünge 8 sind jeweils zwischen zwei benachbarten Bünden 11 angeordnet, genauer gesagt sind die Vorsprünge 8 und die Bünde 11 alternierend angeordnet. Die Bünde 11 erstrecken sich jeweils seitlich bis nahezu an die Vorsprünge 8 heran, so dass die Stirnseiten der Vorsprünge 8 freistehen. Sollte bei Einpressen der Lagerbuchse in die jeweilige Vorrichtungsaufnahme die Oberseite der Vorsprünge 8 abgetragen werden, so können abgetragene Materialien durch die zwischen den Bünden 11 verbleibenden Kanäle 13 leicht entfernt werden. Es versteht sich, dass gegebenenfalls auch die Bünde 11 die Vorsprünge 8 teilweise seitlich übergreifen oder gegebenenfalls auch die Vorsprünge 8 in Axialrichtung hinter den Bünden 11 angeordnet sein können, auch wenn dies weniger vorteilhaft ist.

Die Bünde 11 übergreifen ferner die Stege 9 und die Ausnehmungen 10 beidseitig, wodurch die Deformierbarkeit der Stege 9 beeinflusst bzw. eingestellt werden kann. Die Stege sind hierdurch an ihren vorderen Enden im wesentlichen starr.

Insgesamt gesehen können durch die erfindungsgemäße Lagerbuchse somit Toleranzen der Weite der Vorrichtungsaufnahme ausgeglichen werden, so dass sich auch bei Bemaßungstoleranzen von bis zu 1 mm ein nahezu konstantes Verstellmoment der Lagerbuchse ergibt. Andererseits können die erfindungsgemäßen Vorsprünge als Montage- bzw. Zentrierhilfe dienen, falls die Lagerbuchse nicht oder nicht ausschließlich im Presssitz in der Vorrichtungsaufnahme befestigt wird.

Wie in Figur 2 dargestellt ist, können beim Einpressen der Lagerbuchse 1 in die Aufnahme der Vorrichtung 14 die Vorsprünge 8 radial nach innen gepresst und vollständig von den Ausnehmungen 10 aufgenommen werden, so dass die zylindrische Umfangsfläche 7 des Gehäuses an der Innenseite der Vorrichtungsaufnahme flächig anliegt. Auch bei vollständig bis auf die Gehäuseumfangsfläche 7 eingedrückten Vorsprüngen 8 gemäß Figur 2c ist unterhalb der Vorsprünge 8 in der Ausnehmung 10 noch ein gewisser Freiraum 15 vorhanden, welcher der Stärke des Steges 9 entsprechen kann.

Figur 3 zeigt eine Lagerbuchse nach den Figuren 1 und 2, die in einer Vorrichtungsaufnahme mit etwas größerem Durchmesser als derjenige der Vorrichtungsaufnahme nach Figur 2 im Presssitz gehaltert ist. Wie Figur 3c zu entnehmen ist, sind die Stege 9 hierbei in radialer Richtung nur geringfügig eingedrückt, so dass die Oberseiten der Vorsprünge 8 wiederum die Lagerbuchse im Presssitz in der Vorrichtungsaufnahme festlegen. Durch die erfindungsgemäße Ausbildung der Lagerbuchse kann diese bei den Montageanordnungen nach den Figuren 2 und 3 mit nahezu gleichem Verstellmoment bezüglich einer axialen und/oder rotatorischen Lageveränderung in der Vorrichtungsaufnahme festgelegt werden. Die erfindungsgemäße Lagerbuchse kann somit auch bei deutlichen Toleranzen der Vorrichtungsaufnahme stets mit relativ definiertem gleich bleibendem Presssitz in der Vorrichtungsaufnahme festgelegt werden, was für den Betrieb der jeweiligen mit der Lagerbuchse versehenen Vorrichtung Vorteile mit sich bringt.

### Bezugszeichenliste

- 1: Lagerbuchse
- 2: Gehäuse
- 3: Lagerkörper
- 4: Lagerbereich
- 5: Aufnahme
- 6: Längsachse
- 7: Umfangsfläche
- 8: Vorsprung
- 9: Steg
- 10: Ausnehmung
- 11: Bund
- 12: Gehäusestirnseite
- 13: Kanal
- 14: Vorrichtung
- 15: Freiraum

## Patentansprüche

1. Lagerbuchse mit einem Lagerbereich mit einer Aufnahme zur gleitenden oder gelenkigen Lagerung eines Bauteils und mit einem den Lagerbereich radial außenseitig umgebenden Gehäuse, welches einen in einer Vorrichtungsaufnahme festlegbaren Haltebereich aufweist, wobei an der Gehäuseaußenseite (7) am Haltebereich eine Mehrzahl von radial von dem Gehäuse (2) vorstehenden Vorsprüngen (8) vorgesehen ist, die in radialer Richtung deformierbar und/oder lageveränderlich gelagert sind, **dadurch gekennzeichnet, dass** die Vorsprünge (8) jeweils an einem sich beidseitig der Vorsprünge (8) in Umfangsrichtung erstreckendem, in radialer Richtung deformierbaren Steg (9) angeordnet sind und dass der Steg (9) jeweils beidseitig der Vorsprünge (8) an dem Gehäuse lastabtragend befestigt ist.

2. Lagerbuchse nach Anspruch 1, **dadurch gekennzeichnet, dass** in radialer Richtung unterhalb des Steges (9) jeweils eine Ausnehmung (10) vorgesehen ist, die sich in Umfangsrichtung und axialer Richtung zumindest über die Erstreckung des jeweils an dem Steg (9) vorgesehenen Vorsprungs (8) erstreckt.

3. Lagerbuchse nach Anspruch 2, **dadurch gekennzeichnet, dass** sich die Ausnehmung (10) in Umfangsrichtung und axialer Richtung über die Erstreckung des jeweils der Ausnehmung zugeordneten Stege (9) erstreckt.

4. Lagerbuchse nach einem der Ansprüche 1 bis 3, **dadurch gekennzeichnet, dass** sich der Steg (9) in Umfangsrichtung über ein Vielfaches der Umfangsausdehnung des jeweils an diesem angeordneten Vorsprungs (8) erstreckt.

5. Lagerbuchse nach einem der Ansprüche 1 bis 3, **dadurch gekennzeichnet, dass** die Stege (9) entlang ihrer Axialerstreckung unterschiedliche Elastizitäten aufweisen.

6. Lagerbuchse nach einem der Ansprüche 1 bis 5, **dadurch gekennzeichnet, dass** sich die Vorsprünge (8) jeweils über die gesamte axiale Erstreckung eines Haltebereichs des Gehäuses (2) oder des Gehäuses erstrecken.

7. Lagerbuchse nach einem der Ansprüche 1 bis 6, **dadurch gekennzeichnet, dass** an dem Gehäuse (2) in radialer Richtung vorstehende Bünde (11) vorgesehen sind, die die Tiefe eines Einschubes des Gehäuses in die Vorrichtungsaufnahme begrenzen.

8. Lagerbuchse nach Anspruch 7, **dadurch gekennzeichnet, dass** die Bünde (11) sich von der Gehäusestirnseite (12) aus in radialer Richtung erstrecken.

9. Lagerbuchse nach Anspruch 7 oder 8, **dadurch gekennzeichnet, dass** die radiale Umfangserstreckung der Bünde (11) jeweils ein Vielfaches derjenigen der Vorsprünge (8) beträgt.

10. Lagerbuchse nach einem der Ansprüche 7 bis 9, **dadurch gekennzeichnet, dass** die an den Stegen (9) angeordneten Vorsprünge (8) jeweils zwischen zwei seitlich benachbarten Bünden (11) angeordnet sind.

11. Lagerbuchse nach einem der Ansprüche 7 bis 10, **dadurch gekennzeichnet, dass** sich die Bünde (11) jeweils in Umfangsrichtung einseitig oder beidseitig über die unterhalb der Stege (9) angeordneten Ausnehmungen (10) in Richtung auf den jeweils an dem Steg angeordneten Vorsprung (8) erstrecken.

12. Lagerbuchse nach einem der Ansprüche 1 bis 11, **dadurch gekennzeichnet, dass** die Lagerbuchse (1) derart ausgebildet ist, dass sie bei Maßtoleranzen von bis 0,5 mm oder bis 1 mm der Vorrichtungsaufnahme und/oder bei Temperaturen von Raumtemperatur bis 50°C oder bis 80°C ein nahezu gleich bleibendes Verstellmoment gegen axiale und/oder rotatorische Lageveränderung des Gehäuses in der Vorrichtungsaufnahme ergibt.

13. Lagerbuchse nach einem der Ansprüche 1 bis 12, **dadurch gekennzeichnet, dass** anstelle oder zusätzlich zu der Festlegung des Gehäuses (2) im Presssitz in der Vorrichtungsaufnahme Befestigungsmittel zur axialen und/oder rotatorischen Festlegung desselben in der Vorrichtungsaufnahme vorgesehen sind.

14. Lagerbuchse nach einem der Ansprüche 1 bis 13, **dadurch gekennzeichnet, dass** ein von dem Gehäuse (2) verschiedener, den Lagerbereich (4) umfassender Lagerkörper (3) vorgesehen ist.

15. Lagerbuchse nach einem der Ansprüche 1 bis 14, **dadurch gekennzeichnet, dass** die Lagerbuchse (1) als Gelenklager mit in einem Raumwinkel verschwenkbarer Kugelkalotte als den Lagerbereich umfassenden Lagerkörper (3) ausgeführt ist.

16. Vorrichtung mit einer in einer Vorrichtungsaufnahme festgelegten Lagerbuchse nach einem der Ansprüche 1 bis 15, **dadurch gekennzeichnet, dass** die Lagerbuchse (1) im Presssitz oder alternativ oder zusätzlich durch weitere Befestigungsmittel in der Vorrichtungsaufnahme festgelegt ist.

17. Vorrichtung mit in einer Vorrichtungsaufnahme festgelegten Lagerbuchse nach einem der Ansprüche 1 bis 16, wobei in der Lagerbuchse (1) ein gegenüber dem Lagerbuchsengehäuse lageveränderliches Bauelement gelagert ist.

## Claims

1. Bearing bush with a bearing area with a receptacle for mounting a component in a sliding or flexible manner and with a housing which surrounds the bearing area radially on the outside and has a retaining area which can be fixed in a device receptacle, wherein a plurality of projections (8) protruding radially from the housing (2) are provided on the outside (7) of the housing at the retaining area, which projections are mounted so as to be deformable and/or variable in position in the radial direction, **characterised in that** the projections (8), respectively, are disposed at a web (9) which extends in the circumferential direction on both sides of the projections (8) and is deformable in the radial direction, and that the respective web (9) is fastened to the housing on both sides of the projections (8) so as to remove the load.

2. Bearing bush according to Claim 1, **characterised in that** a respective recess (10) is provided below the web (9) in the radial direction, which recess extends in the circumferential direction and the axial direction at least over the extent of the projection (8) in each case provided at the web (9).

3. Bearing bush according to Claim 2, **characterised in that** the recess (10) extends in the circumferential direction and the axial direction over the extent of the respective webs (9) associated with the recess.

4. Bearing bush according to any one of Claims 1 to 3, **characterised in that** the web (9) extends in the circumferential direction over a multiple of the circumferential extent of the respective projection (8) disposed thereat.

5. Bearing bush according to any one of Claims 1 to 3, **characterised in that** the webs (9) have different resiliences along their axial extent.

6. Bearing bush according to any one of Claims 1 to 5, **characterised in that** the respective projections (8) extend over the entire axial extent of a retaining area of the housing (2) or of the housing.

7. Bearing bush according to any one of Claims 1 to 6, **characterised in that** collars (11), protruding in the radial direction, are provided at the housing (2), which collars limit an insertion of the housing in the device receptacle.

8. Bearing bush according to Claim 7, **characterised in that** the collars (11) extend out from the housing front side (12) in the radial direction.

9. Bearing bush according to Claim 7 or 8, **characterised in that** the radial circumferential extent of the respective collars (11) is a multiple of that of the projections (8).

10. Bearing bush according to any one of Claims 7 to 9, **characterised in that** the projections (8) disposed at the webs (9) are disposed between two laterally adjacent collars (11), respectively.

11. Bearing bush according to any one of Claims 7 to 10, **characterised in that** the respective collars (11) extend in the circumferential direction on one side or on both sides over the recesses (10) disposed below the webs (9) in the direction of the respective projection (8) disposed at the web.

12. Bearing bush according to any one of Claims 1 to 11, **characterised in that** the bearing bush (1) is formed such that, given dimensional tolerances of up to 0.5 mm or up to 1 mm of the device receptacle and/or given temperatures of the room temperature of up to 50°C or up to 80°C, it provides an almost invariable adjusting moment against an axial and/or a rotational change of position of the housing in the device receptacle.

13. Bearing bush according to any one of Claims 1 to 12, **characterised in that,** instead of or in addition to fixing the housing (2) in a press fit in the device receptacle, fastening means are provided to fix the same axially and/or rotationally in the device receptacle.

14. Bearing bush according to any one of Claims 1 to 13, **characterised in that** a bearing body (3) which is different from the housing (2) and comprises the bearing area (4) is provided.

15. Bearing bush according to any one of Claims 1 to 14, **characterised in that** the bearing bush (1) is constructed as a spherical plain bearing with a universal ball joint pivotable in a solid angle as the bearing body (3) comprising the bearing area.

16. Device with a bearing bush fixed in a device receptacle according to any one of Claims 1 to 15, **characterised in that** the bearing bush (1) is fixed in a press fit or alternatively or additionally by further fastening means in the device receptacle.

17. Device with a bearing bush fixed in a device receptacle according to any one of Claims 1 to 16, wherein a construction element variable in position with respect to the bearing bush housing is mounted in the bearing bush (1).

## Revendications

1. Coussinet de palier avec une zone de palier munie d'une cavité pour loger un élément de manière coulissante ou articulée, ainsi qu'un boîtier entourant côté extérieur, dans le sens radial, la zone pour palier, ledit boîtier présentant une zone de retenue pouvant être fixée dans une cavité de dispositif, une pluralité de ressauts (8) en saillie du boîtier (2) dans le sens radial, étant prévue sur la face extérieure (7) du boîtier au niveau de la zone de retenue, lesdits ressauts étant logés de manière déformable et/ou modulable en position dans le sens radial, **caractérisé en ce que** les ressauts (8) sont disposés respectivement au niveau d'une partie de liaison (9) déformable dans le sens radial, et s'étendant, dans la direction périphérique, de part et d'autre des ressauts (8) et **en ce que** la partie de liaison (9) est fixée, charge enlevée, à chaque fois, de part et d'autre, des ressauts (8) au niveau du boîtier.

2. Coussinet de palier selon la revendication 1, **caractérisé en ce qu'**il est prévu, dans le sens radial, en dessous de la partie de liaison (9), à chaque fois, un évidement (10) qui s'étend dans la direction périphérique et dans le sens radial, au moins au-delà de l'extension du ressaut (8) prévu à chaque fois au niveau de la partie de liaison (9).

3. Coussinet de palier selon la revendication 2, **caractérisé en ce que** l'évidement (10) s'étend, dans la direction périphérique et dans le sens radial, au-delà de l'extension de la partie de liaison (9) associée à chaque fois à l'évidement.

4. Coussinet de palier selon l'une quelconque des revendications 1 à 3, **caractérisé en ce que** la partie de liaison (9) s'étend dans la direction périphérique au-delà d'un multiple du développement périphérique du ressaut (8) disposé à chaque fois au niveau de celle-ci.

5. Coussinet de palier selon l'une quelconque des revendications 1 à 3, **caractérisé en ce que** les parties de liaison (9) présentent des élasticités différentes le long de leur extension axiale.

6. Coussinet de palier selon l'une quelconque des revendications 1 à 5, **caractérisé en ce que** les ressauts (8) s'étendent respectivement au-delà de toute l'extension axiale du boîtier (2) ou d'une zone de retenue du boîtier.

7. Coussinet de palier selon l'une quelconque des revendications 1 à 6, **caractérisé en ce qu'**il est prévu, au niveau du boîtier (2), dans le sens radial, des rebords (11) en saillie, qui délimitent la profondeur d'une insertion du boîtier dans la cavité de dispositif.

8. Coussinet de palier selon la revendication 7, **caractérisé en ce que** les rebords (11) s'étendent du côté frontal du boîtier (12) dans le sens radial.

9. Coussinet de palier selon la revendication 7 ou 8, **caractérisé en ce que** l'extension périphérique radiale des rebords (11) est à chaque fois un multiple de chacun des ressauts (8).

10. Coussinet de palier selon l'une quelconque des revendications 7 à 9, **caractérisé en ce que** les ressauts (8) disposés au niveau des parties de liaison (9) sont à chaque fois placés entre deux rebords (11) contigus latéralement.

11. Coussinet de palier selon l'une quelconque des revendications 7 à 10, **caractérisé en ce que** les rebords (11) s'étendent à chaque fois, dans la direction périphérique, d'un côté ou de part et d'autre, au-delà des évidements (10) disposés en dessous des parties de liaison (9), en direction de sur le ressaut (8) disposé à chaque fois au niveau de la partie de liaison.

12. Coussinet de palier selon l'une quelconque des revendications 1 à 11, **caractérisé en ce que** le coussinet de palier (1) est réalisé de telle sorte qu'il produit, dans des tolérances dimensionnelles allant jusqu'à 0,5 mm ou jusqu'à 1 mm de la cavité de dispositif et/ou à des températures allant de la température ambiante jusqu'à 50°C ou jusqu'à 80°C, un couple de réglage pratiquement constant, opposé à tout changement de position giratoire et/ou axial du boîtier dans la cavité de dispositif.

13. Coussinet de palier selon l'une quelconque des revendications 1 à 12, **caractérisé en ce qu'**à la place ou en plus, pour immobiliser le boîtier (2), en ajustement serré, dans la cavité de dispositif, des moyens de fixation pour l'immobilisation giratoire et/ou axiale de celui-ci sont prévus dans la cavité de dispositif.

14. Coussinet de palier selon l'une quelconque des revendications 1 à 13, **caractérisé en ce qu'**il est prévu un corps de palier (3) contenant la zone de palier (4) et distinct du boîtier (2).

15. Coussinet de palier selon l'une quelconque des revendications 1 à 14, **caractérisé en ce que** le coussinet de palier (1) en tant que palier articulé avec une calotte sphérique pouvant être amenée à pivoter dans un angle solide est réalisé en tant que corps de palier (3) contenant la zone de palier.

16. Dispositif avec un coussinet de palier immobilisé dans une cavité de dispositif selon l'une quelconque des revendications 1 à 15, **caractérisé en ce que** le coussinet de palier (1) est fixé en ajustement serré ou selon une variante ou en plus par d'autres dispositifs de fixation dans la cavité de dispositif.

17. Dispositif avec un coussinet de palier immobilisé dans une cavité de dispositif selon l'une quelconque des revendications 1 à 16, sachant qu'un élément modulable en position par rapport au boîtier du coussinet de palier est placé dans le coussinet de palier (1).
